(19) Europäisches Patentamt
European Patent Office
Office européen des brevets

(11) EP 1 362 087 B1

(12) **EUROPÄISCHE PATENTSCHRIFT**

(45) Veröffentlichungstag und Bekanntmachung des Hinweises auf die Patenterteilung:
**21.09.2005 Patentblatt 2005/38**

(21) Anmeldenummer: **02702321.7**

(22) Anmeldetag: **29.01.2002**

(51) Int Cl.[7]: **C10L 1/18**, E21B 37/06, C10L 1/14

(86) Internationale Anmeldenummer:
**PCT/EP2002/000882**

(87) Internationale Veröffentlichungsnummer:
**WO 2002/064706 (22.08.2002 Gazette 2002/34)**

# (54) VERWENDUNG VON CARDANOL-ALDEHYDHARZEN ALS ASPHALTEN-DISPERGATOREN IN ROHÖLEN

USE OF CARDANOL ALDEHYDE RESINS AS ASPHALT DISPERSANTS IN CRUDE OIL

UTILISATION DE RESINES CARDANOL-ALDEHYDES EN TANT QUE DISPERSANTS D'ASPHALTENES DANS DES PETROLES BRUTS

(84) Benannte Vertragsstaaten:
**DE FR GB IT NL**

(30) Priorität: **10.02.2001 DE 10106144**

(43) Veröffentlichungstag der Anmeldung:
**19.11.2003 Patentblatt 2003/47**

(73) Patentinhaber: **Clariant GmbH**
**65929 Frankfurt am Main (DE)**

(72) Erfinder:
- **LEINWEBER, Dirk**
  **84453 Mühldorf (DE)**
- **FEUSTEL, Michael**
  **55278 Köngernheim (DE)**
- **WASMUND, Elisabeth**
  **84508 Burgkirchen (DE)**
- **GRUNDNER, Heidi**
  **84518 Garching/Alz (DE)**

(74) Vertreter: **Mikulecky, Klaus et al**
**Clariant Service GmbH**
**Patente, Marken, Lizenzen**
**Am Unisys-Park 1**
**65843 Sulzbach/Ts. (DE)**

(56) Entgegenhaltungen:
**US-A- 5 021 498**
**US-A- 5 494 607**
**US-A- 5 460 750**
**US-A- 5 525 201**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft die Verwendung von Cardanol-Aldehydharzen als Asphalten-Dispergatoren in Rohölen und von diesen abgeleiteten, asphaltenhaltigen Ölen, sowie Roh- und Rückstandsöle, die diese Harze enthalten.

Asphaltene sind Bestandteile von Rohölen. Sie enthalten eine Vielzahl von Strukturen, besonders hochmolekulare kondensierte aromatische Komponenten mit Heteroatomen. Angesichts der Komplexität ihrer Chemie werden Asphaltene als die Ölfraktion beschreiben, die in Benzol, aber nicht in n-Pentan löslich ist.

Im Rohöl liegen Asphaltene normalerweise als kolloidale Dispersion vor. Diese wird durch Ölharze stabilisiert.

Asphaltene können während der Produktion, der Raffination, des Transports und der Lagerung von Rohöl und davon abgeleiteten Produkten, wie z.B. schweres Heizöl oder Schiffsöl, ausfallen. Gemeinsame Ursachen für dieses Ausfallen sind ein Absinken der Temperatur oder ein Wechsel in der Zusammensetzung (z.B. Verdampfung von leicht flüchtigen Bestandteilen). Asphaltene können auch beim Fließen durch poröse Medien ausfallen. Fluten mit $CO_2$ während des Förderprozesses kann Asphaltene zum Flokkulieren oder zum Ausfallen bringen.

Manche Öle enthalten Kohlenwasserstoffwachse, die bei niedrigen Temperaturen ausfallen. Wechselwirkungen zwischen dem Ausfallen von Wachs und Asphaltenen können die Gesamtmenge an ausgefallener Substanz oder deren Bildungsgeschwindigkeit erhöhen.

Ausgefallene Asphaltene verursachen Probleme bei der Produktion und bei der Verarbeitung von Rohölen. Asphaltene schlagen sich in Ventilen, Rohren und Fördereinrichtungen nieder. An heißen Oberflächen, wie beispielsweise Wärmetauschern, kann die Carbonisierung dieser Niederschläge ihre Entfernung sehr schwierig machen. Die Niederschläge reduzieren den Wirkungsgrad von Anlagen und können im schlimmsten Fall zu einer kompletten Blokkierung und zu einem Produktionsstop führen, was hohe Kosten verursacht.

Schweröle, die oft zum Antrieb von Schiffen verwendet werden, enthalten beträchtliche Mengen an Asphaltenen. Das Ausfallen von Asphaltenen kann sowohl zu schlechter Verbrennung als auch zu Schwierigkeiten bei der Handhabung und bei der Lagerung des Treibstoffes führen.

Bitumen, Schweröle und Rückstände werden manchmal mit Lösemittel verdünnt, um die Viskosität für den Transport zu reduzieren. Wenn dabei Asphaltene ausfallen, so ergeben sich damit Probleme bei der Handhabung.

Das Ausfallen von Asphaltenen kann durch kleine Mengen an Dispergatoren verhindert oder verringert werden. Diese Dispergatoren zeigen einen oder mehrere der folgenden Effekte:

a) die Menge an Niederschlag wird reduziert;
b) der Niederschlag bildet sich langsamer;
c) der Niederschlag ist feiner verteilt; und
d) die Neigung des Niederschlages, sich auf Oberflächen abzulagern, wird reduziert.

Wenn sich bereits Niederschläge von Asphaltenen gebildet haben, können sie durch den Gebrauch von Lösemifteln entfernt werden. Die Zugabe eines Dispergators kann die Wirksamkeit dieser Lösemittel verbessern.

Eine Vielzahl von Asphalten-Dispergatoren sind bereits bekannt. CA-A-2 029 465 und CA-A-2 075 749 beschreiben Alkylphenolformaldehydharze in Kombination mit hydrophilen-lipophilen Vinylpolymeren. Die asphaltendispergierenden Eigenschaften von Dodecylbenzolsulfonsäure wurden beschrieben in US-4 414 035, außerdem durch D.-L. Chang und H.S. Fogler (SPE paper No. 25185, 1993) und durch M.N. Bouts et al. (J. Pet. Technol. 47, 782-7, 1995). Cardanol-Formaldehydharze wurden bereits als Vorstufen für Erdölemulsionsspalter hergestellt (US-5 525 201), wurden aber nicht als Asphalten-Dispergatoren verwendet.

US-5 494 607 offenbart die Verwendung von Nonylphenol-Pentadecylphenol-Formaldehydharzen als Asphaltendispergatoren in Rohölen, wobei das Pentadecylphenol aus Cashewnüssen gewonnen wurde.

US-5 460 750 und US-5 525 201 offenbaren Cardanol-Formaldehydharze als Demulgatoren in Rohölen.

Die bisher bekannten Dispergatoren können die durch das Ausfallen von Asphaltenen verursachten Probleme nur teilweise lösen. Da Öle in ihrer Zusammensetzung variieren, können einzelne Dispergatoren nur in einem beschränkten Bereich wirksam arbeiten. Manchmal haben sogar kleine Änderungen in der Ölzusammensetzung einen großen Effekt auf die Dispergiereigenschaften für Asphaltene. Deshalb sind in einigen Fällen die bekannten Dispergatoren nicht zufriedenstellend und zusätzliche Typen sind erforderlich.

Es bestand somit die Aufgabe, neue Asphalten-Dispergatoren zur Verfügung zu stellen, die die beschriebenen Nachteile der bisher bekannten Dispergatoren nicht aufweisen.

Überraschenderweise wurde gefunden, dass Cardanol-Aldehydharze verwendet werden können, um das Ausfallen und/oder das Ablagern von Asphaltenen in Rohölen und davon abgeleiteten Produkten zu verhindern.

Gegenstand der Erfindung ist somit die Verwendung von Harzen, erhältlich durch Umsetzung von Cardanol mit einer Verbindung der Formel (1)

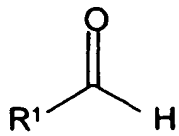

(1)

worin

$R^1$ für CHO, COOH oder $COOR^2$, und
$R^2$ für $C_1$-$C_{30}$-Alkyl, $C_2$-$C_{30}$-Alkenyl, $C_6$-$C_{18}$-Aryl oder $C_7$-$C_{30}$-Alkylaryl steht,

und welche ein zahlenmittleres Molekulargewicht von 250 bis 100.000 Einheiten aufweisen, in Mengen von 0,5 bis 10.000 ppm bezogen auf das Öl, zur Dispergierung von Asphaltenen in Rohölen oder von diesen abgeleiteten Produkten.

Ein weiterer Gegenstand der Erfindung sind Rohöle und von diesen abgeleitete Produkte, die 0,5 bis 10.000 ppm der oben definierten Harze enthalten.

Ein weiterer Gegenstand der Erfindung ist ein Verfahren zur Dispergierung von Asphaltenen in Rohölen und von diesen abgeleiteten Produkten, indem man den Ölen 0,5 bis 10.000 ppm der oben definierten Harze zusetzt.

Bei den erfindungsgemäßen Verbindungen handelt es sich beispielsweise um solche der Formeln 2 bis 5.

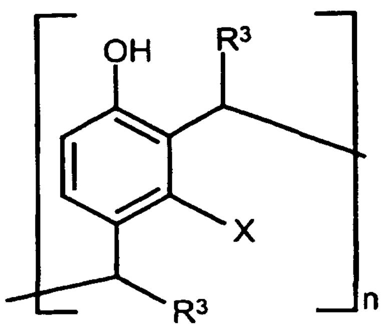

(2)

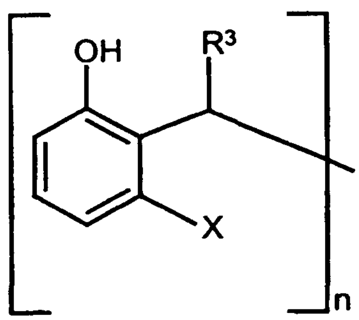

(3)

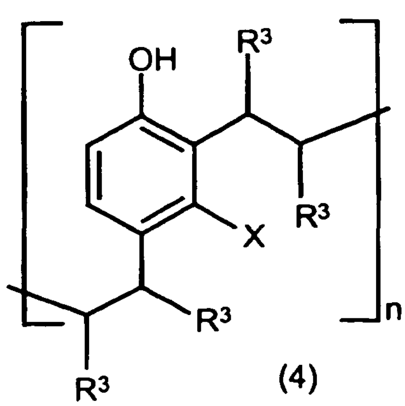

(4)

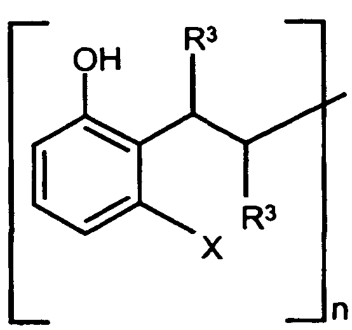

(5)

Verwendet man Glyoxal zur Kondensation, so handelt es sich bei dem Rest $R^3$ zunächst um OH. Die so entstandene freie OH-Gruppe kann zusätzlich noch verestert oder verethert werden, so dass $R^3$ die Bedeutung O-Alkyl, O-Aryl, O-Alkenyl, O-Alkylaryl, OCO-Alkyl, OCO-Aryl, OCO-Alkenyl, OCO-Alkylaryl haben kann. Entsprechende, durch nachträgliche Veretherung der Harze hergestellte Verbindungen fallen ebenfalls unter den Gegenstand vorliegender

Erfindung. Die Begriffe "Alkyl", "Alkenyl", "Aryl" und "Alkylaryl" sind so zu verstehen, wie für die Definition von $R^2$ angegeben. $R^3$ kann daneben die gleiche Bedeutung haben, wie sie für $R^1$ und $R^2$ angegeben ist.

Cardanol ist ein Bestandteil des Öls, dass aus der Schale des Cashew-Kems gewonnen wird. Sein Hauptbestandteil ist ein Alkylphenol der Formel 6

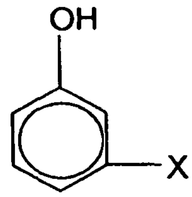

(6)

X ist eine Kohlenwasserstoffkette mit ca. 15 Kohlenstoffatomen und 1 bis 3 Doppelbindungen, wie beispielsweise in R. Ikeda et al., Macromol. Rapid Commun. 21, 496-499 (2000) und A. Mahannar, Journal of Applied Polymer Science, 61, 2107 - 2111 (1996) offenbart.

$R^2$ steht vorzugsweise für einen Alkenyl- oder Alkylrest, einer Kettenlänge von 6 bis 24, besonders bevorzugt 8 bis 22, speziell 12 bis 18 Kohlenstoffatome. Alkyl-und Alkenylreste können sowohl linear als auch verzweigt sein.

Steht $R^2$ für einen Alkylarylrest, so bedeutet Alkylaryl vorzugsweise einen über den aromatischen Kern gebundenen Rest, dessen aromatischer Kern vorzugsweise 6 Kohlenstoffatome umfasst, und der in o-, m- oder p-Stellung zur oben genannten Bindung einen Alkylrest mit einer Kettenlänge von vorzugsweise 1 bis 18, besonders bevorzugt 4 bis 16, insbesondere 6 bis 12 Kohlenstoffatomen trägt.

Von Rohölen abgeleitete Produkte sind beispielsweise schweres Heizöl, Schiffsöl oder Bitumen.

Neben auf reinem Cardanol basierenden Harzen wirken auch Kondensate aus Mischungen von Cardanol und Alkylphenolen der Formel (7) mit Verbindungen gemäß Formel 1 als Asphalten-Dispergatoren,

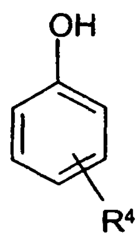

(7)

in denen $R^4$ und OH zueinander in ortho-, meta- oder para-Stellung stehen können, und $R^4$ für $C_1$- bis $C_{30}$-Alkyl, $C_6$- bis $C_{30}$-Alkenyl, $C_6$- bis $C_{18}$-Aryl oder $C_7$- bis $C_{30}$-Alkylaryl steht. Besondere Wirksamkeit zeigen Harze basierend auf den Cardanol/Alkylphenol-Mischungen mit para-Kresol, para-Ethylphenol, para-iso-Propylphenol, para-tert-Butylphenol, para-iso-Octylphenol, para-iso-Nonylphenol, para-iso-Dodecylphenol, para-Phenylphenol und para-Cumylphenol in den Verhältnissen 1:100 bis 100:1, bevorzugt 1:10 bis 10:1, besonders bevorzugt 1:5 bis 5:1, speziell 2:1 bis 1:2, insbesondere 1:1.

Die Herstellung der erfindungsgemäßen Harze erfolgt im allgemeinen durch sauer oder alkalisch katalysierte Kondensation von Cardanol mit den entsprechenden Aldehyden. Die Reaktionstemperatur liegt im allgemeinen zwischen 50 und 170°C, vorzugsweise bei 120 bis 165°C. Die Reaktion wird normalerweise bei Atmosphärendruck durchgeführt. Als katalysierende Säuren sind beispielsweise HCl, $H_2SO_4$ , Sulfonsäuren oder $H_3PO_4$ zu nennen, als Basen NaOH, KOH oder Triethylamin, die in Mengen von 0,1 bis 50 Gew.-%, bezogen auf das Gewicht des Reaktionsgemisches verwendet werden. Die Kondensation nimmt im allgemeinen 30 Min. bis 6 Stunden in Anspruch. Das molare Verhältnis zwischen Aldehyd und Cardanol beträgt im allgemeinen von 0,5 : 1 bis 4 : 1, vorzugsweise von 0,8 : 1 bis 1,8 : 1.

Der erfindungsgemäße Dispergator wird in einer Konzentration von 0,5 bis 10.000 ppm, vorzugsweise von 2 bis 2.000 ppm eingesetzt.

Zur leichteren Dosierung kann der Dispergator als Lösung in einem ölmischbaren Lösemittel formuliert werden, wie beispielsweise aromatische Kohlenwasserstoffe oder Mischungen von Kohlenwasserstoffen und einem aliphatischen Alkohol. Zusätzlich zu dem erfindungsgemäßen Dispergator können auch Alkylphenolformaldehydharze,

oxalkylierte Amine, Wachsdispergatoren oder beliebige Mischungen daraus verwendet werden. Ebenfalls können andere organische Säuren mit Tensideigenschaften wie z.B. Mono- oder Dialkylbenzolsulfonsäuren, Petrolsulfonsäuren und Alkansulfonsäuren als zusätzliche Komponenten eingesetzt werden.

Beispiele

Beispiel 1 (Vergleich): Umsetzung von Cardanol mit Formaldehyd

In einem 500 ml Vierhalskolben mit Kontaktthemnometer, Rührer, Tropftrichter und Wasserauskreiser wurden 100,0 g Cardanol (M = 302), 100 ml eines aromatischen Lösungsmittels und 1,1 g Alkylbenzolsulfonsäure (0,5 mol-%) vorgelegt. Unter Rühren und Stickstoffspülung wurde das Reaktionsgemisch auf 120°C erhitzt und bei dieser Temperatur langsam 26,8 g wässrige Formaldehyd-Lösung (37 %ig) zugetropft. Nach beendeter Zugabe wurde eine Stunde bei 120°C und eine Stunde bei 165°C gerührt und das entstehende Reaktionswasser über den Auskreiser abgenommen. Das Produkt wurde am Rotationsverdampfer zur Trockene einrotiert (Ausbeute: 107,2 g) und über GPC analysiert.

Beispiel 2: Umsetzung von Cardanol mit Glyoxal

In einem 500 ml Vierhalskolben mit Kontaktthermometer, Rührer, Tropftrichter und Wasserauskreiser wurden 100,0 g Cardanol (M = 302), 100 ml eines aromatischen Lösungsmittels und 1,1 g Alkylbenzolsulfonsäure (0,5 mol-%) vorgelegt. Unter Rühren und Stickstoffspülung wurde das Reaktionsgemisch auf 120°C erhitzt und bei dieser Temperatur langsam 19,3 g wässrige Glyoxal-Lösung (50 %ig) zugetropft. Nach beendeter Zugabe wurde eine Stunde bei 120°C und eine Stunde bei 165°C gerührt und das entstehende Reaktionswasser über den Auskreiser abgenommen. Das Produkt wurde am Rotationsverdampfer zur Trockene einrotiert (Ausbeute: 102,8 g) und über GPC analysiert.

Beispiel 3: Umsetzung von Cardanol mit Glyoxalsäure

In einem 500 ml Vierhalskolben mit Kontaktthermometer, Rührer, Tropftrichter und Wasserauskreiser wurden 100,0 g Cardanol (M = 302), 100 ml eines aromatischen Lösungsmittels und 1,1 g Alkylbenzolsulfonsäure (0,5 mol-%) vorgelegt. Unter Rühren und Stickstoffspülung wurde das Reaktionsgemisch auf 120°C erhitzt und bei dieser Temperatur langsam 17,3 g wässrige Glyoxalsäure-Lösung (50 %ig) zugetropft. Nach beendeter Zugabe wurde eine Stunde bei 120°C und eine Stunde bei 165°C gerührt und das entstehende Reaktionswasser über den Auskreiser abgenommen. Das Produkt wurde am Rotationsverdampfer zur Trockene einrotiert (Ausbeute: 107,3 g) und über GPC analysiert.

Beispiel 4 (Vergleich):

Umsetzung von Cardanol und para-iso-Nonylphenol mit Formaldehyd

In einem 500 ml Vierhalskolben mit Kontaktthermometer, Rührer, Tropftrichter und Wasserauskreiser wurden 50,0 g Cardanol (M = 302), 50,0 g para-iso-Nonylphenol (M = 220), 100 ml eines aromatischen Lösungsmittels und 1,1 g Alkylbenzolsulfonsäure (0,5 mol-%) vorgelegt. Unter Rühren und Stickstoffspülung wurde das Reaktionsgemisch auf 120°C erhitzt und bei dieser Temperatur langsam 23,2 g wässrige Formaldehyd-Lösung (37 %ig) zugetropft. Nach beendeter Zugabe wurde eine Stunde bei 120°C und eine Stunde bei 165°C gerührt und das entstehende Reaktionswasser über den Auskreiser abgenommen. Das Produkt wurde am Rotationsverdampfer zur Trockene einrotiert (Ausbeute: 104,9 g) und über GPC analysiert.

Beispiel 5 (Vergleich):

Umsetzung von Cardanol und para-Cumylphenol mit Formaldehyd

In einem 500 ml Vierhalskolben mit Kontaktthermometer, Rührer, Tropftrichter und Wasserauskreiser wurden 50,0 g Cardanol (M = 302), 50,0 g para-Cumylphenol (M = 212), 100 ml eines aromatischen Lösungsmittels und 1,1 g Alkylbenzolsulfonsäure (0,5 mol-%) vorgelegt. Unter Rühren und Stickstoffspülung wurde das Reaktionsgemisch auf 120°C erhitzt und bei dieser Temperatur langsam 22,8 g wässrige Formaldehyd-Lösung (37 %ig) zugetropft. Nach beendeter Zugabe wurde eine Stunde bei 120°C und eine Stunde bei 165°C gerührt und das entstehende Reaktionswasser über den Auskreiser abgenommen. Das Produkt wurde am Rotationsverdampfer zur Trockene einrotiert (Ausbeute: 104,9 g) und über GPC analysiert.

Beispiel 6: Umsetzung von Cardanol mit Glyoxalsäuredodecylester

In einem 1000 ml Rührkolben mit Kontaktthermometer, Rührer, Tropftrichter und Wasserauskreiser wurden

100,0 g Cardanol (M = 302) und 0,5 g Alkylbenzolsulfonsäure (0,5 Mol-%) in 100 g eines aromatischen Lösungsmittels gelöst. Unter Rühren und Stickstoffspülung wurde das Reaktionsgemisch auf 120°C erhitzt. Bei 120°C wurden 75,6 g Glyoxalsäuredodecylester (M = 242) in 100 g eines aromatischen Lösungsmittels langsam zugetropft. Nach beendeter Zugabe ließ man eine Stunde bei 120°C und eine Stunde bei 165°C nachreagieren. Das dabei entstehende Reaktionswasser wurde über den Auskreiser abgenommen. Das Produkt wurde am Rotationsverdampfer zur Trockene einrotiert (Ausbeute: 168,4 g) und über GPC analysiert.

Prüfung der Wirksamkeit von Asphaltendispergatoren

Prinzip des Dispergiertestes

Dispergierung und Ausfällen von Asphaltenen hängt von der Natur des Kohlenwasserstoffmediums ab. Asphaltene sind in aromatischen, aber nicht in aliphatischen Kohlenwasserstoffen löslich. Somit können Dispergatoren getestet werden, indem man das Öl oder extrahierte Asphaltene in einem aromatischen Lösemittel löst und dann einen aliphatischen Kohlenwasserstoff zugibt, um einen Niederschlag zu erzeugen. Da Asphaltene von dunkler Farbe sind, kann die Menge des Niederschlages durch eine kolorimetrische Messung der überstehenden Flüssigkeit bestimmt werden. Je dunkler die überstehende Flüssigkeit ist, desto mehr Asphaltene bleiben dispergiert, d.h. umso besser ist der Dispergator. Dieser Test wird beschrieben in CA-A-2 029 465. In unserer Version des Tests wird das Fällungsmedium so ausgewählt, dass die Asphaltene zum größten Teil, aber nicht komplett ausfallen. Der Dispergiertext wird gemäß den Schritten a) bis f) durchgeführt:

a) Eine 25 %ige Öl-Lösung in Toluol wird filtriert, um Verunreinigungen zu beseitigen.
b) 9,5 ml Heptan als Fällungsmittel für Asphaltene und 0,5 ml Toluol/Dispergator-Mischung (25:1) in ein gut 10 ml fassendes graduiertes Glasröhrchen vorlegen und gut schütteln. Dies entspricht einer Dispergatorkonzentration von 2000 ppm. Bei Bedarf kann die Menge Dispergator variiert werden. Für die Nullproben wird reines Toluol verwendet.
c) In das Glasröhrchen wird dann 0,1 ml von der gefilterten Öl-Lösung dazugegeben und ebenfalls gut geschüttelt;
d) Die Probe 2 Stunden ohne Erschütterungen stehen lassen, damit die ausgefällten Asphaltene sich am Boden des Röhrchens sammeln können.
e) Nach Ablauf dieser Zeit wird das Volumen des Sediments an Hand der Graduierung abgeschätzt, das Aussehen der gesamten Probe protokolliert und dann wird von der überständigen Phase 1 ml vorsichtig mit einer Pipette aufgenommen.
f) Die abpipettierte Menge wird in 5 ml einer 99:1 Toluol-Triethanolamin-Mischung gelöst und bei 600 nm photometriert.

Bewertung des Dispergiertests

Die Dispergierung A) wird mit folgender Gleichung errechnet:

$$A = 100\,(D-D_0)/D_0,$$

wobei D und $D_0$ optische Dichte von Messlösung und Blindprobe sind. Der maximal erreichbare Wert von A, $A_{max}$, entspricht vollständiger Dispergierung der Asphaltene. Sie kann abgeschätzt werden, indem ein Versuch ohne Dispergator, mit Toluol anstatt Heptan, durchgeführt wird - dadurch bleiben die Asphaltene vollständig dispergiert. Das Volumen des Sediments liefert eine weitere Information über die Wirksamkeit des Dispergators. Je kleiner die Menge an Sediment ist, desto besser dispergiert ist die Substanz.

Dispergierwirkung der Beispielverbindungen

Mit einem asphaltenreichen Öl aus Venezuela wurden erfindungsgemäße Substanzen mit dem Dispergiertest geprüft. Die Dispergatordosis betrug 2000 ppm.

| | Dispergierwirkung A [%] |
|---|---|
| Produkt aus Beispiel 1 | 99,5 |
| Produkt aus Beispiel 2 | 98,6 |

(fortgesetzt)

| | Dispergierwirkung A [%] |
|---|---|
| Produkt aus Beispiel 3 | 97,4 |
| Produkt aus Beispiel 4 | 98,5 |
| Produkt aus Beispiel 5 | 98,7 |
| Produkt aus Beispiel 6 | 99,8 |
| kommerz. Produkt | 81,4 |
| ohne Dispergator | 0 |

Bei dieser Versuchsreihe betrug die maximale Dispergierwirkung $A_{max}$ ca.99,5 %

**Patentansprüche**

1. Verwendung von Harzen, erhältlich durch Umsetzung von Cardanol mit einer Verbindung der Formel (1)

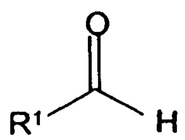
(1)

worin

$R^1$ für CHO, COOH oder $COOR^2$, und
$R^2$ für $C_1$-$C_{30}$-Alkyl, $C_2$-$C_{30}$-Alkenyl, $C_6$-$C_{18}$-Aryl oder $C_7$-$C_{30}$-Alkylaryl steht,

und welche ein zahlenmittleres Molekulargewicht von 250 bis 100.000 Einheiten aufweisen, in Mengen von 0,5 bis 10.000 ppm bezogen auf das Öl, zur Dispergierung von Asphaltenen in Rohölen oder von diesen abgeleiteten Produkten.

2. Verwendung gemäß Anspruch 1, wobei Cardanol in Mischung mit Alkylphenolen der Formel (7) umgesetzt wird

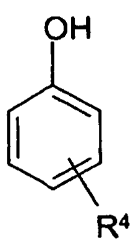
(7)

in denen $R^4$ und OH zueinander in ortho-, meta- oder para-Stellung stehen können, und $R^4$ für $C_1$- bis $C_{30}$-Alkyl, $C_6$- bis $C_{30}$-Alkenyl, $C_6$- bis $C_{18}$-Aryl oder $C_7$- bis $C_{30}$-Alkylaryl steht.

3. Verwendung gemäß Anspruch 1 und/oder 2, wobei $R^1$ für CHO steht.

4. Verwendung gemäß Anspruch 3, wobei das aus der Umsetzung erhaltene Harz verestert oder verethert wird.

5. Verfahren zum Dispergieren von Asphaltenen in Rohölen und davon abgeleiteten Produkten, **dadurch gekenn-**

**zeichnet, dass** Cardanol-Aldehydharze gemäß einem oder mehreren der Ansprüche 1 bis 4 in einer Menge von 0,5 bis 10.000 ppm zugegeben werden.

6. Verfahren gemäß Anspruch 5, **dadurch gekennzeichnet, dass** zusätzlich Alkylphenolformaldehydharze, oxalkylierte Amine, Mono- oder Dialkylbenzolsulfonsäuren, Petrolsulfonsäuren, Alkansulfonsäuren, Wachsdispergator oder beliebige Mischungen daraus verwendet werden.

7. Rohöl oder ein davon abgeleitetes Produkt, enthaltend einen Asphaltendispergator gemäß einem oder mehreren der Ansprüche 1 bis 4.

## Claims

1. The use of resins obtainable by reacting cardanol with a compound of the formula (1)

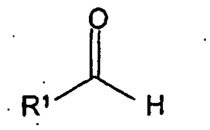

(1)

in which

$R^1$ is CHO, COOH or $COOR^2$, and
$R^2$ is $C_1$-$C_{30}$-alkyl, $C_2$-$C_{30}$-alkenyl, $C_6$-$C_{18}$-aryl or $C_7$-$C_{30}$-alkylaryl,

and which have a number-average molecular weight of from 250 to 100 000 units, in amounts of from 0.5 to 10 000 ppm, based on the oil, for dispersing asphaltenes in crude oils or products derived therefrom.

2. The use as claimed in claim 1, where cardanol is reacted in a mixture with alkylphenols of the formula (7)

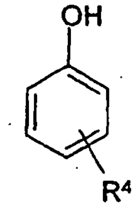

(7)

in which $R^4$ and OH may be in the ortho, meta or para position relative to one another, and $R^4$ is $C_1$- to $C_{30}$-alkyl, $C_6$- to $C_{30}$-alkenyl, $C_6$- to $C_{18}$-aryl or $C_7$- to $C_{30}$-alkylaryl.

3. The use as claimed in claim 1 and/or 2, where $R^1$ is CHO.

4. The use as claimed in claim 3, where the resin obtained from the reaction is esterified or etherified.

5. A process for dispersing asphaltenes in crude oils and products derived therefrom, which comprises adding cardanol-aldehyde resins as claimed in one or more of claims 1 to 4 in an amount of from 0.5 to 10 000 ppm.

6. The process as claimed in claim 5, wherein alkylphenol formaldehyde resins, oxyalkylated amines, mono- or dialkylbenzenesulfonic acids, petroleum sulfonic acids, alkanesulfonic acids, wax dispersant or any mixtures thereof are additionally used.

7. A crude oil or a product derived therefrom comprising an asphaltene dispersant as claimed in one or more of claims 1 to 4.

## Revendications

**1.** Utilisation de résines pouvant être obtenues par réaction de cardanol avec un composé de formule (1)

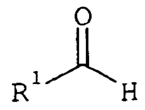

(1)

dans laquelle

$R^1$ est CHO, COOH ou $COOR^2$, et
$R^2$ est un groupe alkyle en $C_1$-$C_{30}$, alcényle en $C_2$-$C_{30}$, aryle en $C_6$-$C_{18}$ ou alkylaryle en $C_7$-$C_{30}$,

et qui présentent une masse moléculaire moyenne en nombre de 250 à 100 000 unités, en des quantités de 0,5 à 10 000 ppm par rapport à l'huile, pour la dispersion d'asphaltènes dans les pétroles bruts, ou de produits qui en sont les dérivés.

**2.** Utilisation selon la revendication 1, pour laquelle le cardanol est mis à réagir en mélange avec des alkylphénols de formule (7)

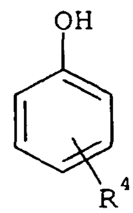

(7)

dans laquelle $R^4$ et OH peuvent être en position ortho, méta ou para l'un par rapport à l'autre, et $R^4$ est un groupe alkyle en $C_1$-$C_{30}$, alcényle en $C_6$-$C_{30}$, aryle en $C_6$-$C_{18}$ ou alkylaryle en $C_7$-$C_{30}$.

**3.** Utilisation selon la revendication 1 et/ou 2, pour laquelle $R^1$ est CHO.

**4.** Utilisation selon la revendication 3, pour laquelle la résine obtenue à partir de la réaction subit une estérification ou une éthérification.

**5.** Procédé de dispersion d'asphaltènes dans des pétroles bruts et de produits qui en dérivent, **caractérisé en ce que** des résines de cardanol-aldéhydes selon l'une ou plusieurs des revendications 1 à 4 sont ajoutées en une quantité de 0,5 à 10 000 ppm.

**6.** Procédé selon la revendication 5, **caractérisé en ce qu'**on utilise en outre des résines d'alkylphénolformaldéhyde, des amines alcoxylées, des acides mono- ou dialkylbenzènesulfoniques, des acides pétrole-sulfoniques, des acides alcanesulfoniques, des dispersants aliphatiques, ou des mélanges quelconques de ceux-ci.

**7.** Pétrole brut ou produit qui en dérive, contenant un dispersant des asphaltènes selon l'une ou plusieurs des revendications 1 à 4.